# FASCICULE DE BREVET EUROPEEN

(11) **EP 1 661 443 B1**
(45) Date de publication et mention de la délivrance du brevet: **16.01.2008**
(21) Numéro de dépôt: 05110558.3
(22) Date de dépôt: 09.11.2005
(51) Int. Cl.: A01B 59/043

(54) **Machine avec un dispositif d'accouplement au système d'attelage trois points d'un tracteur**
Maschine mit einer Anschlußvorrichtung am Dreipunkt Kupplungssystem eines Traktors
Machine with a coupling device to the three point linkage system of a tractor

(30) Priorité: 30.11.2004 FR 0452811
(43) Date de publication de la demande: 31.05.2006
(73) Titulaire: Kuhn-Audureau S.A., 85260 La Copechagniere (FR)
(72) Inventeur: Peterschmitt, Mickael, 85300, Le Perrier (FR); Gaillard, Louis-Marc, 85000, La Roche sur Yon (FR)
(74) Mandataire: Andres, Jean-Claude

(56) Documents cités:
- AT-B- 341 255
- DE-A1- 4 136 515
- US-A- 816 218
- US-A- 4 331 347

## Description

La présente invention se rapporte à une machine comportant un dispositif pour l'accouplement à un système d'attelage trois points d'un tracteur, ledit dispositif présentant notamment un moyen d'accrochage et deux mécanismes d'accouplement inférieurs qui sont situés à un même niveau et à une certaine distance l'un de l'autre, lequel moyen est destiné à l'accrochage à deux barres d'attelage inférieures relevables hydrauliquement du système d'attelage trois points du tracteur, chaque mécanisme d'accouplement inférieur étant constitué par au moins une patte comportant, d'une part, une encoche sensiblement en forme de V destinée à recevoir le moyen d'accrochage et, d'autre part, un crochet mobile.

Une telle machine peut être une faucheuse, une débroussailleuse ou une broyeuse pouvant être employée par exemple dans l'agriculture, la sylviculture ou l'entretien des bords de routes. Ces machines comportent généralement des outils qui sont déportés latéralement par rapport aux tracteurs de manière à pouvoir travailler sur les côtés. Le poids de ces machines en position déportée tend à déstabiliser l'attelage ce qui peut entraîner une rapide détérioration des moyens d'attelage voire provoquer une perte de contrôle de la position de outil.

Pour remédier à cela il est déjà connu dans le brevet FR 2 791 863 d'interposer entre le système d'attelage du tracteur et le dispositif d'accouplement de la machine un mécanisme de stabilisation. Un tel mécanisme est cependant volumineux, ce qui entraîne notamment un éloignement de la machine du tracteur et donc une augmentation du porte-à-faux. De plus, il est relativement onéreux, ce qui fait que certains propriétaires d'une machine à outil déporté n'utilisent pas un tel mécanisme de stabilisation.

Un dispositif comportant les caractéristiques du préambule de la revendication 1, est connu de DE-A-4136515.

La présente invention a pour but de remédier aux inconvénients pré-cités. Elle doit notamment proposer une machine avec un dispositif d'accouplement simple et capable de résister à d'importants efforts latéraux.

A cet effet, une importante caractéristique de l'invention consiste en ce que le crochet mobile de chaque mécanisme d'accouplement inférieur est déplaçable dans une position d'immobilisation par coincement dudit moyen d'accrochage dans l'encoche correspondante.
Cet agencement permet pratiquement d'obtenir une liaison rigide entre la machine et les barres d'attelage du système d'attelage trois points du tracteur. Une telle liaison permet d'avoir un meilleur maintien de la machine par rapport au tracteur quelle que soit la position de l'outil de travail. En sus, cet agencement est simple et donc d'un coût peu élevé. Enfin, il ne dégrade ni la garde au sol ni le porte-à-faux de la machine.

Selon une autre caractéristique de l'invention, le crochet mobile qui se situe dans la position hors service est débloqué automatiquement par le moyen d'accrochage lorsque celui-ci s'engage dans l'encoche de la patte du mécanisme d'accouplement correspondant. Ledit crochet se déplace ensuite dans la position d'immobilisation par pivotement autour d'un axe sous l'effet de son propre poids. L'opération d'accouplement de la machine au tracteur est ainsi très facile à réaliser.

Selon une autre caractéristique de l'invention le moyen d'accrochage est constitué par une traverse qui est liée aux deux barres d'attelage du tracteur et qui comporte des parties cylindriques se logeant dans les encoches des pattes des mécanismes d'accouplement de la machine. Ladite traverse procure une meilleure stabilité aux barres d'attelage.

D'autres caractéristiques et avantages de l'invention ressortiront de la description qui va suivre et qui se réfère aux dessins annexés qui représentent, à titre d'exemple non limitatif, une forme de réalisation d'une machine selon l'invention.

Dans ces dessins :
- la figure 1 représente une vue générale d'une machine selon l'invention attelée à un tracteur,
- la figure 2 représente une vue d'ensemble du dispositif d'accouplement selon l'invention,
- la figure 3 représente une vue de détail du mécanisme d'accouplement de la machine en position hors service,
- la figure 4 représente une vue de détail du mécanisme d'accouplement de la machine en cours d'attelage,
- la figure 5 représente une vue de détail du mécanisme d'accouplement de la machine en position d'immobilisation.

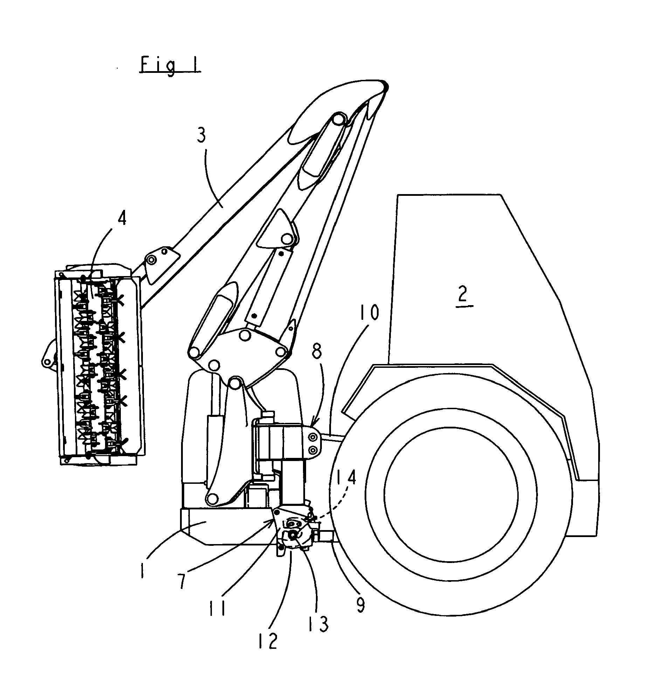

Telle qu'elle est représentée sur la figure 1, la machine selon l'invention est une débroussailleuse. Elle comporte un bâti (1) pouvant être accroché au système d'attelage trois points d'un tracteur (2). Ce bâti (1) possède un bras articulé (3) portant à son extrémité un outil de débroussaillage (4). Ce dernier peut être déplacé à l'aide de bras (3) de manière à pouvoir travailler dans différentes positions plus ou moins éloignées du tracteur (2).

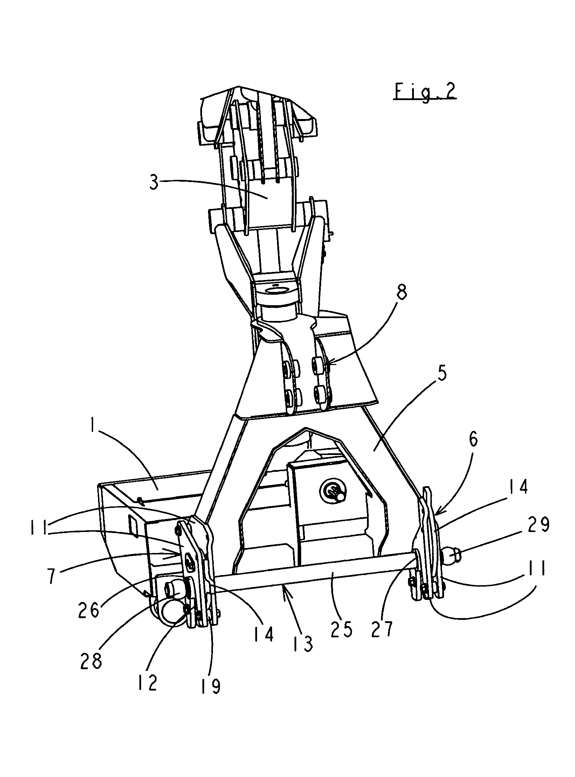

Comme cela ressort de la figure 2, la machine comporte un dispositif d'accouplement (5) présentant notamment deux mécanismes d'accouplement inférieurs (6 et 7) et un mécanisme d'accouplement supérieur (8). Les deux mécanismes inférieurs (6 et 7) sont situés au même niveau par rapport au sol et à une certaine distance l'un de l'autre. Ils sont destinés à l'accouplement à deux barres d'attelage (9) relevables hydrauliquement du système d'attelage trois points du tracteur (2). Le troisième mécanisme d'accouplement (8) se situe à un niveau supérieur et est destiné à être relié par une chandelle (10) à un point d'accouplement supérieur du tracteur (2).

Chaque mécanisme d'accouplement inférieur (6 et 7) est constitué par deux pattes (11) parallèles et sensiblement verticales et qui sont situées à une faible distance l'une de l'autre. Il est aussi possible de n'utiliser qu'une seule patte (11) légèrement plus épaisse pour avoir une résistance équivalente. Chacune de ces pattes (11) comporte une encoche (12) sensiblement en forme de V qui est ouverte vers le bas et dont la pointe est dirigée vers le haut. Cette encoche est destinée à recevoir un moyen d'accrochage (13) lié aux barres d'attelage inférieures (9). Ledit mécanisme d'accouplement (6, 7) comporte en plus un crochet mobile (14) déplaçable dans une position d'immobilisation du moyen d'accrochage (13) dans l'encoche (12) correspondante. Ce crochet (14) peut se situer entre les deux pattes (11).

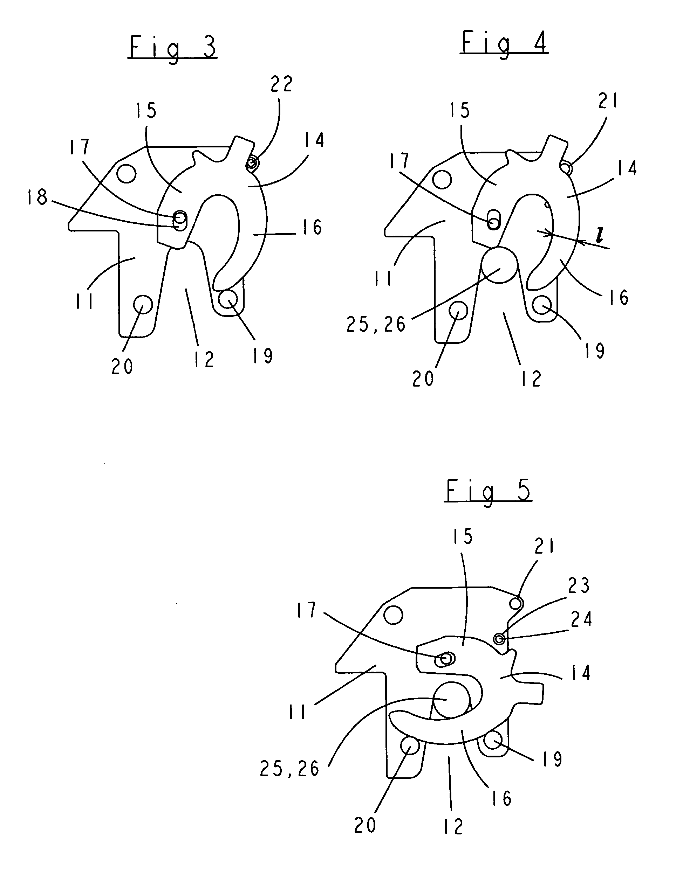

On voit notamment sur les figures 3 à 5 que chaque crochet (14) est constitué par une première branche (15) et une deuxième branche (16) qui sont reliées entre elles de manière à former un U. Ladite première branche (15) du crochet (14) est articulée sur un axe (17) de la patte (11) au moyen d'un orifice oblong (18). La deuxième branche (16) du crochet (14) possède une largeur (1) qui augmente progressivement en se rapprochant de la première branche (15). Chaque patte (11) comporte également un ou deux appuis (19, 20) pour la deuxième branche (16) du crochet (14). Ces appuis (19, 20) sont constitués par des plots situés de part et d'autre de l'encoche (12). Le deuxième appui (20) sert de renfort. En sus, chaque patte (11) comporte un premier orifice (21) pour une broche de retenue (22) du crochet (14) en position hors service. Ce premier orifice (21) se situe à la partie supérieure de la patte (11). Cette dernière peut comporter un deuxième orifice (23) pour une broche de retenue (24) du crochet (14) en position d'immobilisation. Ce deuxième orifice (23) se situe plus près de l'encoche (12) que le premier orifice (21).

Conformément à l'exemple représenté sur la figure 2, le moyen d'accrochage (13) qui est lié aux barres d'attelage inférieures (9) du tracteur (2) est constitué par une traverse (25). Celle-ci comporte deux parties cylindriques (26, 27) se logeant dans les encoches (12) des pattes (11). Elles comportent également des extrémités (28, 29) qui s'étendent au-delà desdites parties cylindriques (26, 27) et qui sont destinées à être reliées aux barres d'attelage (9). Cette traverse (25) peut également comporter des points d'accrochage d'organes de stabilisation supplémentaires reliés au tracteur (2).

Pour effectuer l'accrochage de la machine selon l'invention à un tracteur il faut placer chaque crochet (14) dans la position hors service telle que représentée sur la figure 3. Dans cette position chaque crochet (14) est dégagé vers le haut par pivotement autour de son axe (17). La deuxième branche (16) de chaque crochet (14) repose alors sur le premier appui (19) prévu sur la patte (11) correspondante. La première branche (15) s'étend partiellement dans l'encoche (12). La longueur de la partie qui s'étend ainsi dans l'encoche (12) est sensiblement égale à la valeur du jeu entre l'axe (17) et l'extrémité du trou oblong (18). Cette position du crochet (14) peut être assurée pour un maintien de longue durée au moyen de la broche (22) qui est engagée dans le premier orifice (21) de sorte qu'elle bloque ledit crochet (14). Ensuite, la traverse (25) qui est liée aux barres d'attelage inférieures (9) est amenée dans les encoches (12) et est déplacée vers le haut à l'aide desdites barres d'attelage (9). Lorsque les parties cylindriques (26, 27) de cette traverse (25) arrivent dans la pointe des encoches (12) elles poussent les crochets (14) et les dégagent vers le haut sur une distance sensiblement égale à la valeur du jeu dans les trous oblongs (18) (figure 4). De cette manière, les crochets (14) sont éloignés des premiers appuis (19) et, si les broches de retenue (22) sont retirées des premiers orifices (21), ils pivotent automatiquement vers le bas sous l'effet de leur propre poids, autour des axes (17), jusque dans la position d'immobilisation représentée sur la figure 5. Dans cette position, la traverse (25) se situe entre les deux branches (15 et 16) des crochets (14). Les deuxièmes branches (16) des crochets (14) s'appuient alors sur les appuis (19 et 20) et, grâce à leur largeur qui augmente progressivement, coincent la traverse (25) dans la pointe des encoches (12) en vue d'obtenir une liaison quasi rigide. Cette immobilisation de la traverse (25) peut être assurée durant le travail par l'engagement de broches (24) dans les deuxièmes orifices (23) des pattes (11) de sorte que lesdites broches (24) bloquent les crochets (14). Enfin, la chandelle (10) peut être accrochée au troisième mécanisme d'accouplement (8) et au point d'attelage supérieur du système d'attelage du tracteur (2). Ainsi accouplée, la machine peut être utilisée pour effectuer les travaux tels que le débroussaillage.

Pour détacher la machine du tracteur (2), les crochets (14) doivent être débloqués par l'utilisateur et être déplacés vers le haut autour des axes (17) dans la position hors service. Ils libèrent ainsi la traverse (25) qui pourra être dégagée par le bas des encoches (12).

Il est bien évident que l'invention n'est pas limitée au mode de réalisation décrit et représenté sur les dessins annexés. Des modifications restent possibles, notamment en ce qui concerne la constitution des divers éléments ou par substitution d'équivalents techniques, sans pour autant sortir du domaine de protection tel que défini dans les revendications.

## Revendications

1. Machine comportant un dispositif (5) pour l'accouplement à un système d'attelage trois points d'un tracteur (2), ledit dispositif d'accouplement (5) présentant notamment un moyen d'accrochage (13) et deux mécanismes d'accouplement inférieurs (6 et 7) qui sont situés à un même niveau et à une certaine distance l'un de l'autre, lequel moyen (13) est destiné à l'accrochage à deux barres d'attelage inférieures (9) relevables hydrauliquement du système d'attelage trois points, chaque mécanisme d'accouplement inférieur (6, 7) étant constitué par au moins une patte (11) comportant, d'une part, une encoche (12) sensiblement en forme de V destinée à recevoir un moyen d'accrochage (13) et, d'autre part, crochet mobile (14), ***caractérisée par le fait* que** le crochet mobile (14) est déplaçable dans une position d'immobilisation par coincement du moyen d'accrochage (13) dans l'encoche (12) correspondante.

2. Machine selon la revendication 1, ***caractérisée par le fait* que** chaque patte (11) est sensiblement verticale et comporte une encoche (12) en forme de V avec la pointe dirigée vers le haut.

3. Machine selon la revendication 1 ou 2, ***caractérisée par le fait* que** le crochet (14) est constitué par une première branche (15) et une deuxième branche (16) qui sont reliées entre elles de manière à former un U.

4. Machine selon la revendication 3, ***caractérisée par le fait* que** la première branche (15) du crochet (14) est articulée sur un axe (17) de la patte (11) correspondante au moyen d'un orifice oblong (18).

5. Machine selon la revendication 3, ***caractérisée par le fait* que** la deuxième branche (16) du crochet (14) possède une largeur (1) qui augmente progressivement en se rapprochant de la première branche (15).

6. Machine selon la revendication 5, ***caractérisée par le fait* que** dans la position d'immobilisation, le moyen d'accrochage (13) se situe entre les deux branches (15 et 16) du crochet (14) et est coincé dans la pointe de l'encoche (12) par la deuxième branche (16).

7. Machine selon l'une quelconque des revendications 1 à 6, ***caractérisée par le fait* que** chaque patte (11) comporte au moins un appui (19, 20) pour la deuxième branche (16) du crochet (14).

8. Machine selon l'une quelconque des revendications précédentes, ***caractérisée par le fait* que** le crochet (14) est déplaçable autour de l'axe (17) dans une position hors service dans laquelle la première branche (15) s'étend partiellement dans l'encoche (12).

9. Machine selon la revendication 8, ***caractérisée par le fait* que** le crochet (14) est déblocable automatiquement par le moyen d'accrochage (13) s'engageant dans la pointe de l'encoche (12) et qu'il est déplaçable dans la position d'immobilisation autour de l'axe (17) sous l'effet de son propre poids.

10. Machine selon l'une quelconque des revendications précédentes, ***caractérisée par le fait* que** chaque patte (11) comporte au moins un premier orifice (21) pour une broche de retenue (22) du crochet (14) en position hors service.

11. Machine selon l'une quelconque des revendications précédentes, ***caractérisée par le fait* que** chaque patte (11) comporte au moins un deuxième orifice (23) pour une broche de retenue (24) du crochet (14) en position d'immobilisation.

12. Machine selon l'une quelconque des revendications précédentes, ***caractérisée par le fait* que** le moyen d'accrochage (13) est constitué par une traverse (25) liée aux deux barres d'attelage (9) du tracteur (2) et comportant des parties cylindriques (26, 27) se logeant dans les encoches (12) des pattes (11).

13. Machine selon l'une quelconque des revendications précédentes, ***caractérisée par le fait* qu'**elle comporte un troisième dispositif d'accouplement (8) relié par une chandelle (10) à un point d'accouplement supérieur du tracteur (2).

## Claims

1. Machine comprising a device (5) for coupling to a three-point linkage system of a tractor (2), the said coupling device (5) having in particular a hitching means (13) and two lower coupling mechanisms (6 and 7) that are situated at one and the same level and at a certain distance from one another; the said means (13) is intended for hitching to two hydraulically raisable lower linkage bars (9) of the three-point linkage system, each lower coupling mechanism (6, 7) consisting of at least one cramp (11) comprising, on the one hand, a substantially V-shaped notch (12) intended to receive a hitching means (13) and, on the other hand, a movable hook (14), ***characterized in* that** the movable hook (14) can be moved into a position of immobilization by trapping the hitching means (13) in the corresponding notch (12).

2. Machine according to Claim 1, ***characterized in* that** each cramp (11) is substantially vertical and comprises a V-shaped notch (12) with the apex directed upwards.

3. Machine according to Claim 1 or 2, ***characterized in* that** the hook (14) consists of a first branch (15) and a second branch (16) that are connected together to form a U.

4. Machine according to Claim 3, ***characterized in* that** the first branch (15) of the hook (14) is articulated on an axis (17) of the corresponding cramp (11) by means of an oblong orifice (18).

5. Machine according to Claim 3, ***characterized in* that** the second branch (16) of the hook (14) has a width (1) that increases progressively as it comes closer to the first branch (15).

6. Machine according to Claim 5, ***characterized in* that**, in the immobilization position, the hitching means (13) is situated between the two branches (15 and 16) of the hook (14) and is trapped in the apex of the notch (12) by the second branch (16).

7. Machine according to any one of Claims 1 to 6, ***characterized in* that** each cramp (11) comprises at least one support (19, 20) for the second branch (16) of the hook (14).

8. Machine according to any one of the preceding claims, ***characterized in* that** the hook (14) can be moved about the spindle (17) into an out-of-service position in which the first branch (15) extends partially into the notch (12).

9. Machine according to Claim 8, ***characterized in* that** the hook (14) can be automatically released by the hitching means (13) engaging in the apex of the notch (12) and that it can be moved into the immobilization position about the axis (17) under the effect of its own weight.

10. Machine according to any one of the preceding claims, ***characterized in* that** each cramp (11) comprises at least a first orifice (21) for a pin (22) for keeping the hook (14) in the out-of-service position.

11. Machine according to any one of the preceding claims, ***characterized in* that** each cramp (11) comprises at least a second orifice (23) for a pin (24) for keeping the hook (14) in the immobilization position.

12. Machine according to any one of the preceding claims, ***characterized in* that** the hitching means (13) consists of a cross member (25) connected to the two linkage bars (9) of the tractor (2) and comprising cylindrical portions (26, 27) housed in the notches (12) of the cramps (11).

13. Machine according to any one of the preceding claims, ***characterized in* that** it comprises a third coupling device (8) connected by a shore (10) to an upper hitching point of the tractor (2).

## Patentansprüche

1. Maschine mit einer Vorrichtung (5) zum Kuppeln an ein Dreipunkt-Kupplungssystem eines Traktors (2), wobei die Kupplungsvorrichtung (5) insbesondere ein Befestigungsmittel (13) und zwei untere Kupplungsmechanismen (6 und 7) aufweist, die sich auf einer selben Ebene und in einem gewissen Abstand zueinander befinden, wobei das Mittel (13) für die Befestigung an zwei hydraulisch hochstellbaren unteren Kupplungsstangen (9) des Dreipunkt-Kupplungsmechanismus bestimmt ist, wobei jeder untere Kupplungsmechanismus (6, 7) von mindestens einem Befestigungsteil (11) gebildet ist, mit einerseits einer im Wesentlichen V-förmige Kerbe (12), die für die Aufnahme eines Befestigungsmittels (13) bestimmt ist, und andererseits einem beweglichen Haken (14), ***dadurch gekennzeichnet,* dass** der bewegliche Haken (14) in eine Feststellungsposition durch Einklemmen des Befestigungsmittels (13) in der entsprechenden Kerbe (12) verschiebbar ist.

2. Maschine nach Anspruch 1, ***dadurch gekennzeichnet,* dass** jedes Befestigungsteil (11) im Wesentlichen vertikal ist und eine V-förmige Kerbe (12) mit einer nach oben gerichteten Spitze umfasst.

3. Maschine nach Anspruch 1 oder 2, ***dadurch gekennzeichnet,* dass** der Haken (14) von einem ersten Schenkel (15) und einem zweiten Schenkel (16) gebildet ist, die miteinander derart verbunden sind, dass sie ein U bilden.

4. Maschine nach Anspruch 3, ***dadurch gekennzeichnet,* dass** der erste Schenkel (15) des Hakens (14) auf einer Achse (17) des entsprechenden Befestigungteils (11) mittels einer länglichen Öffnung (18) angelenkt ist.

5. Maschine nach Anspruch 3, ***dadurch gekennzeichnet,* dass** der zweite Schenkel (16) des Hakens (14) eine Breite (1) aufweist, die durch Annäherung an den ersten Schenkel (15) progressiv zunimmt.

6. Maschine nach Anspruch 5, ***dadurch gekennzeichnet,* dass** in der Feststellungsposition das Befestigungsmittel (13) zwischen den beiden Schenkeln (15 und 16) des Hakens (14) angeordnet und in der Spitze der Kerbe (12) durch den zweiten Schenkel (16) eingeklemmt ist.

7. Maschine nach irgend einem der Ansprüche 1 bis 6, ***dadurch gekennzeichnet,* dass** jedes Befestigungsteil (11) mindestens eine Abstützung (19, 20) für den zweiten Schenkel (16) des Hakens (14) umfasst.

8. Maschine nach irgend einem der vorhergehenden Ansprüche, ***dadurch gekennzeichnet,* dass** der Haken (14) um die Achse (17) in eine Außerbetriebsposition verschiebbar ist, in der sich der erste Schenkel (15) teilweise in der Kerbe (12) erstreckt.

9. Maschine nach Anspruch 8, ***dadurch gekennzeichnet,* dass** der Haken (14) automatisch durch das Befestigungsmittel (13), das in die Spitze der Kerbe (12) eingreift, deblockiert werden kann, und dass er in die Feststellungsposition um die Achse (17) unter der Wirkung seines eigenen Gewichts verschiebbar ist.

10. Maschine nach irgend einem der vorhergehenden Ansprüche, ***dadurch gekennzeichnet,* dass** jedes Befestigungsteil (11) mindestens eine erste Öffnung (21) für eine Spindel (22) zum Halten des Hakens (14) in der Außerbetriebsposition umfasst.

11. Maschine nach irgend einem der vorhergehenden Ansprüche, ***dadurch gekennzeichnet,* dass** jedes Befestigungsteil (11) mindestens eine zweite Öffnung (23) für eine Spindel (24) zum Halten des Hakens (14) in Feststellungsposition umfasst.

12. Maschine nach irgend einem der vorhergehenden Ansprüche, ***dadurch gekennzeichnet,* dass** das Befestigungsmittel (13) von einer Querstrebe (25) gebildet ist, die mit den beiden Kupplungsstangen (9) des Traktors (2) verbunden ist und zylindrische Teile (26, 27) aufweist, die in den Kerben (12) der Befestigungsteile (11) eingreifen.

13. Maschine nach irgend einem der vorhergehenden Ansprüche, ***dadurch gekennzeichnet,* dass** sie eine dritte Kupplungsvorrichtung (8) umfasst, die durch eine Hubstange (10) mit einem oberen Kupplungspunkt des Traktors (2) verbunden ist.
